# EUROPEAN PATENT APPLICATION

(11) **EP 3 002 474 A1**
(43) Date of publication of application: **06.04.2016**
(21) Application number: 15002682.1
(22) Date of filing: 16.09.2015
(51) Int. Cl.: F16D 1/095

(54) **ASSEMBLY FOR SHRINKING ROTATING SHAFTS**

(30) Priority: 19.09.2014 IT VI20140241
(71) Applicant: MAV S.p.A., 38049 Altopiano della Vigolana (Trento) (IT)
(72) Inventor: Zamboni, Sandro, 38049 Vigolo Vattaro (Trento) (IT)
(74) Representative: Maroscia, Antonio

(57) **Abstract**

A shrinking assembly for rotating shafts (A), comprising a substantially tubular hollow shaft (2) designed to be fitted onto a rotating shaft (A) of a machine and defining a longitudinal axis (L), a first shrinker (7) having a first tubular element (8) fitted in the hollow shaft (2) and interacting with a second tubular element (9) designed to be placed on the rotating shaft (A), the latter elements having a first pair of frustoconical surfaces (11, 12) interacting to impart a first locking action for clamping the rotating shaft (A), a second shrinker (25) having a first annular element (26) fitted in the hollow shaft (2) and a second annular element (27) fitted on the first annular member (26), such elements having a second pair of frustoconical surfaces (29, 30) interacting to exert a second locking action for clamping the hollow shaft (2) on the first shrinker (7), actuating means (42) for promoting the relative longitudinal movement of the first (7) and second (25) shrinkers. The actuating means (42) comprise traction members (43) which simultaneously interact with the first (7) and second (25) shrinkers to simultaneously adjust the first and second locking actions.

## Description

### Field of the invention

The present invention generally finds application in the field of mechanical coupling systems for motion transfer and particularly relates to a shrinking assembly for shrinking rotating shafts.

### Background art

In the field of mechanical part coupling systems, it has been long known to use shrinking devices for shrinking hollow shafts onto generally solid rotating shafts.

These devices are particularly employed in gearmotors, which have a driven hollow shaft designed to be coupled to a solid drive shaft of a motor or a mechanical load.

These known devices include the so-called shrink disks, which can rotatably couple a hollow shaft and a solid shaft by exerting a radial compression that can prevent any relative rotation therebetween.

Shrink disks ensure coupling of a hollow shaft onto a solid shaft within a range of driving torque applied to one of the shafts.

A first drawback of these prior art devices is that they afford stable and efficient shaft coupling only at torques that are deemed to be substantially constant.

A further drawback of these arrangements is their poor versatility, as they allow each hollow shaft to be only coupled to solid shafts having a predetermined fixed diameter. Therefore, the operator must replace the hollow shaft each time that a solid shaft with a different diameter is used.

In an attempt to overcome these drawbacks, shrinkers have been designed, which have fixed outer fastening flanges and an interchangeable inner adapter that can be selected in accordance with the diameter of the solid shaft, using a tubular sleeve interposed between the hollow shaft and the solid shaft.

US2004/0037638 discloses a system for coupling hollow shafts onto solid shafts, which comprises an inner sleeve adapted to be fitted onto the solid shaft, and an outer shrink disk. Radial compression is generated by tightening the screws of the shrink disk and is transferred to the solid shaft through the radial deformation of the inner sleeve.

Nevertheless, this arrangement can generate limited clamping forces on the shafts and cannot be used when high torques are applied to the shafts.

DE10315534 teaches a shrinking system comprising a pair of conical elements interposed between the solid shaft and the hollow shaft and mutually interacting to define a conical fastening arrangement.

This system further comprises an outer nut that is designed to be tightened on one end of one of the conical elements to increase the inner locking action, and a shrink disk fitted on the hollow shaft and connected to the nut by a plurality of balls.

A first drawback of this known arrangement is that the operator is required to separately act upon the nut and the screw fasteners of the shrink disk to lock the hollow shaft onto the solid shaft as desired. This requires much longer times for system installation/removal as well as great care by the operator.

Furthermore, this known shrinking system can provide a limited reduction of the radial clearance between the solid shaft and the hollow shaft and between the latter and the shrink disk, and requires a very complex and time-consuming process for removing all the parts, piece after piece.

A further drawback of this known arrangement is that the system has a poorly versatile configuration, when it comes to coupling solid shafts with different diameters.

Indeed such adaptation can be only achieved by first removing the flanged ring of the shrink disk and then unscrewing the outer nut to replace the inner conical pair.

Thus, once again the adaptation of the shrinker to the solid shaft is particularly complex and time-consuming.

### Disclosure of the invention

The object of the present invention is to obviate the above mentioned drawbacks, by providing a shrinking assembly for rotating shafts that is highly efficient and relatively cost-effective.

A particular object of the present invention is to provide a shrinking assembly that promotes a highly stable and long-lasting coupling of a rotating shaft with a hollow shaft, even with high torques.

A further object of the present invention is to provide a shrinking assembly for rotating shafts that is highly versatile and can easily couple rotating shafts with different diameters to a single hollow shaft.

Another object of the present invention is to provide a shrinking assembly for shrinking rotating shafts that can easily eliminate any radial clearance between the solid shaft and the hollow shaft.

A further object of the present invention is to provide a shrinking assembly for shrinking rotating shafts that can be easily installed and promotes stable coupling of the hollow shaft with the rotating shaft, while requiring the operator to only carry out a small number of steps.

Yet another object of the present invention is to provide a shrinking assembly that can be removed from the rotating shaft by a single action promoted by the operator.

These and other objects, as better explained hereafter, are fulfilled by a shrinking assembly for rotating shafts as defined in claim 1.

Advantageous embodiments of the invention are obtained in accordance with the dependent claims.

### Brief description of the drawings

Further features and advantages of the invention will be more apparent from the detailed description of a preferred, non-exclusive embodiment of a shrinking assembly for rotating shafts according to the invention, which is described as a non-limiting example with the help of the annexed drawings, in which:
FIG. 1 is a perspective view of a shrinking assembly of the invention according to a first configuration;
FIG. 2 is a lateral view of the shrinking assembly of Fig. 1;
**FIGS. 3A** and **3B** are front and rear views of the shrinking assembly of Fig. 1 respectively;
FIG. 4 is an exploded perspective view of the shrinking assembly of Fig. 1;
FIGS. 5A and 5B are lateral and broken-away exploded views of the shrinking assembly of Fig. 1 respectively;
FIG. 6A is a lateral broken-away view of the shrinking assembly of Fig. 1 in an assembled position;
FIG. 6B is a lateral broken-away assembled view of a second configuration of the shrinking assembly of the invention.

### Detailed description of a preferred embodiment

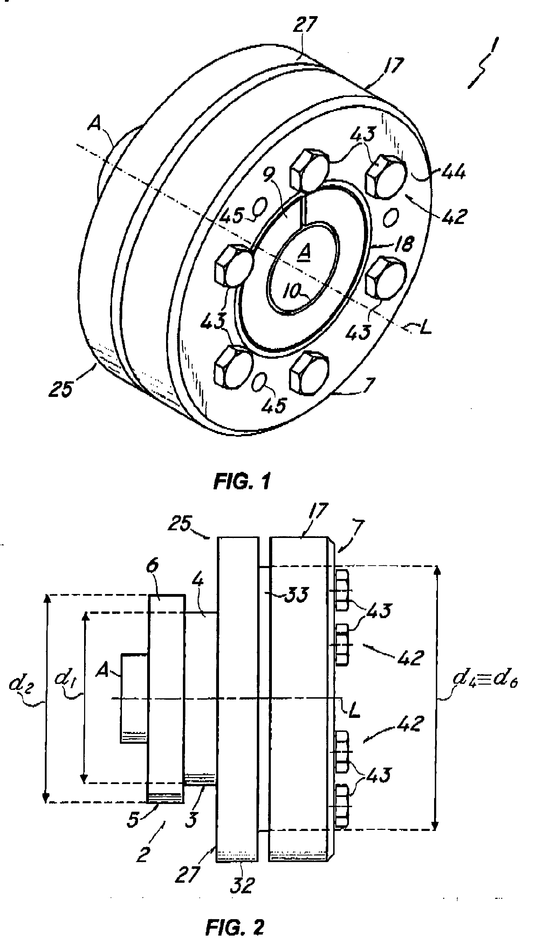

FIGS. 1 and 2 particularly show a shrinking assembly, generally designated by numeral 1, as used for rigidly coupling solid rotating shafts A of machines M of various types, with hollow shafts 2 subjected to a mechanical load.

For example, the hollow shaft 2 might be associated with a gearmotor or a similar device, whereas the rotating shaft A might be associated with a mechanical load. In an alternative embodiment, the hollow shaft 2 may be associated with the load and the rotating shaft A may be integral with the gearmotor.

The assembly 1 of the invention can be used to couple the drive shaft A with the hollow shaft 2 to provide mechanical strength against rotation and comprises, in its basic configuration, a substantially tubular hollow shaft 2 which is adapted to be fitted onto the rotating shaft A and defines a longitudinal axis L.

The hollow shaft 2 may have a first tubular portion 3 with an outer cylindrical surface **4** having a first diameter **d₁,** and a second tubular portion **5** having an annular widened section **6** with a second diameter **d₂** greater than the first diameter **d₁.**

The second tubular portion 5 may be rigidly joined to the motion generating machine, which is identified, for instance, by a gearmotor or other similar devices.

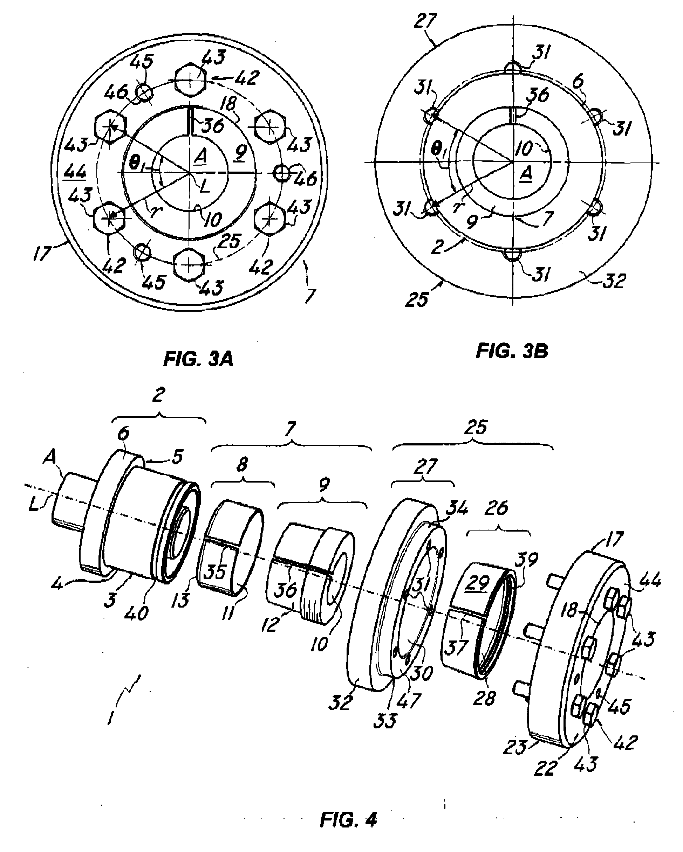

A first shrinker 7 is also provided, as best shown in FIGS. 4 to 6B, which comprises a first tubular element 8 fitted in the hollow shaft and interacting with a second tubular element 9 that may be placed on the rotating shaft A.

Particularly, the second tubular element **9** may have a substantially cylindrical first inner surface **10** having a diameter **d₃** that matches the diameter **d_{A}** of the rotating shaft **A.**

The first tubular element 8 is fitted on the second tubular element 9 and both have a first pair of respective mutually interacting frustoconical surfaces 11, 12, which are adapted to impart a first locking action for clamping the rotating shaft A as the tubular elements 8, 9 come longitudinally close to each other.

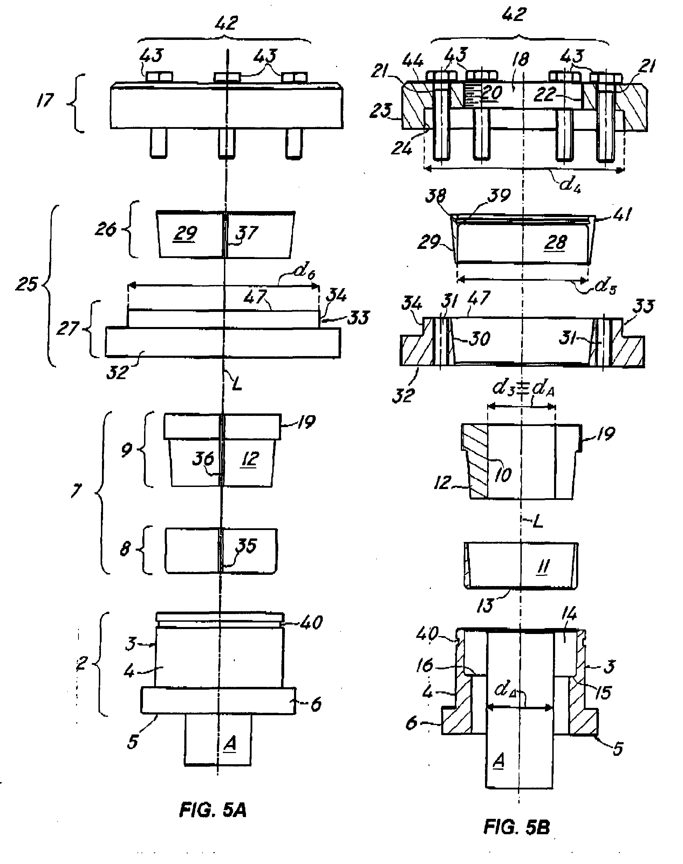

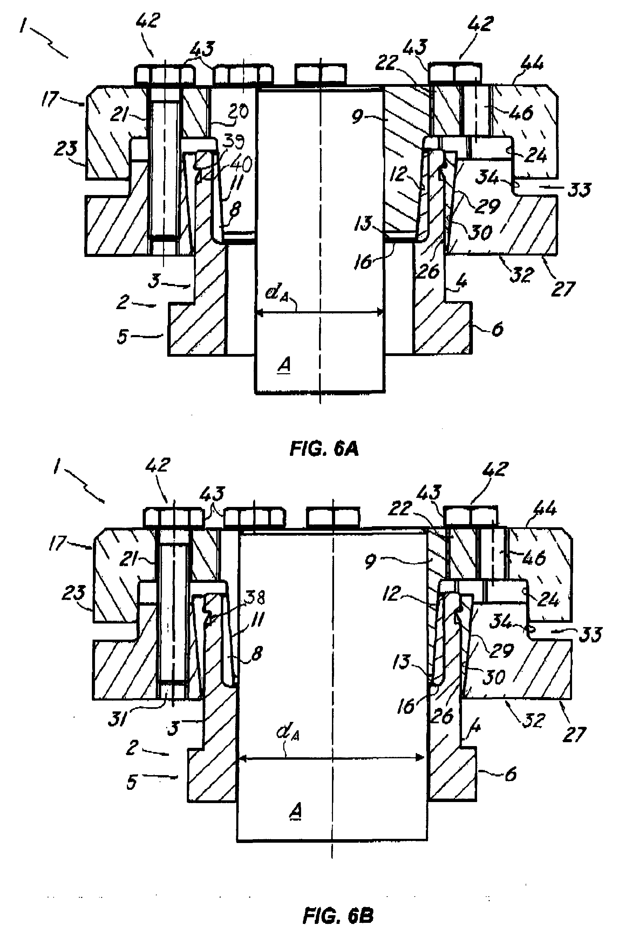

Preferably, as clearly shown in FIGS. 5B, 6A and 6B, the first tubular element 8 may have a substantially flat axial end 13, which is adapted to be fitted into the hollow shaft 2.

Furthermore, the hollow shaft 2 may have a substantially cylindrical inner recess 14 at the first portion 3, with a flat bottom wall 15 defining an abutment surface 16 for the axial end 13 of the first tubular member 8.

With this configuration, the first shrinker 7 may maintain a fixed axial position during rotation of the drive shaft A.

Furthermore, the first shrinker 7 may comprise a radial flange 17 designed to be removably coupled to the second tubular member 9 and having a substantially circular central passage 18.

In the preferred configuration of the invention as shown in the figures, the second tubular element 9 has an externally threaded axial end portion 19 which is designed to be tightened onto respective mating threads 20 formed in the central passage 18 of the flange 17.

This feature will enable shrinking of the assembly 1 onto rotating shafts A having different diameters, by only replacing the second tubular element 9 of the first shrinker 7, with all the other parts remaining unchanged.

For example, FIGS. 6A and 6B show the same assembly 1 with different second tubular elements 9, to allow shrinking of the same hollow shaft 2 onto rotating shafts A of different diameters d_{A}.

Therefore, such configuration of the first shrinker 7 imparts high versatility to the assembly 1, as it allows coupling of a wide range of rotating shafts A having diameters d_{A} ranging from a predetermined minimum value to a predetermined maximum value.

Conveniently, the flange **17** may have a plurality of first substantially longitudinal through holes **21** offset by a predetermined angular pitch θ₁and located at the same radial distance r₁ from the longitudinal axis L.

Furthermore, as best shown in FIGS. 5B to 6B, the flange 17 may have a radial central portion 22 joined to a peripheral portion 23.

The latter may axially extend from the central portion 22 and may comprise a substantially cylindrical inner annular surface 24 with a predetermined inner diameter **d₄.**

The assembly 1 further has a second shrinker 25 comprising a first annular element 26 fitted on the hollow shaft 2 and a second annular element 27 fitted on the first annular element 26.

Particularly, as best shown in FIGS. 4 to 6B, the first annular element 26 may have a tapered cross section with a second cylindrical inner surface 28 having a diameter d₅ substantially equal to the first diameter d₁ thereby allowing it to be placed on the first end portion 3 of the hollow shaft 2.

The second annular element 27 is fitted on the first annular element 26 and both have a second pair of respective mutually interacting frustoconical surfaces 29, 30, which are adapted to impart a second locking action for clamping the hollow shaft 2 on the first shrinker 7 as the tubular elements 26, 27 come close to each other.

Preferably, the second annular element 27 may also have a plurality of internally threaded second holes 31, angularly offset by the same pitch θ₁ as the first holes 21.

Furthermore, the second annular element 27 may have a main radial portion 32 and a reduced-diameter end portion 33 extending from the main portion 32 and having a substantially cylindrical outer surface 34.

The outer surface **34** faces the peripheral portion **23** of the flange **17** and its outer diameter **d₆** substantially matches the inner diameter **d₄** of the inner annular surface **24.**

Conveniently, the first 8 and second 9 tubular elements of the first shrinker 7 may have longitudinal through cuts 35, 36 and the first annular element 26 of the second shrinker 25 may also have a through cut 37.

The provision of these cuts 35, 36, 37 allows elastic radial deformation of the elements 8, 9, 26 as a result of the longitudinal sliding motion of the respective pairs of frustoconical surfaces 11, 12 and 29, 30.

Conveniently, the assembly 1 may comprise connection means 38 for connecting the second shrinker 25 to the hollow shaft 2 and prevent inadvertent release thereof as the assembly 1 is assembled.

In a preferred embodiment, as best shown in FIGS. 4 to 6B, the connection means 38 may comprise an annular projection 39 extending radially inwards from the second inner surface 28 of the first annular element 26, and designed to be removably fitted into a corresponding annular groove 40 formed on the outer surface 4 of the first portion 3 of the hollow shaft 2.

In an alternative embodiment of the invention, not shown, the connection means 38 may comprise an elastic seeger ring, or similar retaining element, adapted to be fitted into an annular groove formed in the first portion 3 of the hollow shaft 2 in front of the end surface 41 of the first annular element 26.

Conveniently, the assembly 1 may comprise actuating means 42 designed to promote the longitudinal movement of the first 7 and second 25 shrinkers to change the first and second locking actions to thereby adjust the radial compression exerted by the hollow shaft 2 on the rotating shaft A.

According to a peculiar aspect of the invention, the actuating means 42 comprise traction members 43 which simultaneously interact with the first 7 and second 25 shrinkers.

With this configuration, the operator may simultaneously adjust the first and second locking actions by only acting on the traction members 43.

As more clearly shown in the figures, the traction members may be defined by a plurality of screws 43 extending through the first holes 21 of the radial flange 17 and adapted to be tightened into the second threaded holes 31 of the second annular element 27.

Thus, as the screws 43 are tightened/loosened, the flange 17 and the second tubular element will move closer/away to/from the second annular element 27 and the first tubular element 8 respectively, thereby simultaneously adjusting the first and second locking actions.

Therefore, as shown in FIGS. 6A and 6B, the outer surface 34 of the second annular element 27 will be able to be slidably coupled with the inner annular surface 24 of the flange 17 to guide the longitudinal movement of the latter as the screws 43 are tightened in the second holes 31.

Thus, the second annular element 27 will guide the flange during its longitudinal movement and prevent it from being axially deformed in its peripheral area due to the effect of the pulling force generated by the screws 43 on its outer face 44.

Conveniently, as shown in FIGS. 1, 3A and 4, the assembly 1 may comprise pull-out means 45 for pulling out the first shrinker 7, allowing easy removal thereof from the rotating shaft A.

Particularly, the pull-out means 45 may comprise a plurality of third threaded through holes 46, formed on the flange 17 in an angularly offset position relative to the first holes 21.

The pull-out means 45 may further comprise a plurality of threaded dowels of screw pullers, not shown, which are adapted to be tightened into their respective third holes 46 and have one end designed to contact the radial edge 47 of the end portion 33 of the second annular element 27.

Alternatively, the first shrinker 7 may be removed by tightening the threaded screws 43 that define the traction members into the third holes 46.

As the dowels or screw pullers are tightened into the third holes 46, the flange 17 will be moved away from the second annular element, and the first pair of frustoconical surfaces 11, 12 will be moved away from each other until the first locking action is completely undone and the second tubular element 9 and the flange 17 can be easily removed.

The assembly of the invention is susceptible of a number of changes and variants, within the inventive principle disclosed in the appended claims.

All the details thereof may be replaced by other technically equivalent parts, and the materials may vary depending on different needs, without departure from the scope of the invention.

While the assembly has been described with particular reference to the accompanying figures, the numerals referred to in the disclosure and claims are only used for the sake of a better intelligibility of the invention and shall not be intended to limit the claimed scope in any manner.

### Industrial applicability

The present invention may find application in industry, because it can be produced on an industrial scale in factories for manufacturing equipment and devices for motion transfer.

## Claims

1. A shrinking assembly for shrinking rotating shafts (A), the assembly comprising:
- a substantially tubular hollow shaft (2) defining a longitudinal axis (L) and designed to be fitted to a rotating shaft (A) of a machine;
- a first shrinker (7) comprising a first tubular member (8) inserted into said hollow shaft (2) and interacting with a second tubular member (9) designed to be mounted to the rotating shaft (A), said first (8) and said second (9) tubular members having a first pair of frusto-conical surfaces (11, 12) mutually interacting to exert a first locking action for clamping the rotating shaft (A);
- a second shrinker (25) comprising a first annular element (26) inserted into said hollow shaft (2) and a second annular element (27) inserted into said first annular element (26), said first (26) and said second (27) annular elements having a second pair of frusto conical surfaces (29, 30) mutually intereacting to exert a second locking action for clamping said hollow shaft (2) to said first shrinker (7);
- actuating means (42) designed to promote a longitudinal relative movement of said first (7) and said second (25) shrinker;
**characterized in that** said actuating means (42) comprise traction members (43) designed to simultaneously interact with said first (7) and said second (25) shrinkers to simultaneously adjust said first and said second locking actions.

2. Assembly as claimed in claim 1, **characterized in that** said first shrinker (7) comprises a first radial flange (17) designed to be removably coupled to said first tubular member (8) and having a substantially circular central passage (18).

3. Assembly as claimed in claim 2, **characterized in that** said first tubular member (8) has a first substantially cylindrical inner surface (10) for the passage of the rotating shaft (A), and an outwardly threaded axial end portion (19) for screwing therof on a corresponding inwardly threaded portion (20) formed in said central passage (18) of said flange (17).

4. Assembly as claimed in claim 2, **characterized in that** said flange (17) has a plurality of through holes (21) angularly offset with a predetermined angular pitch (θ₁), said second annular member (27) having a plurality of second holes (31) inwardly threaded and angularly offset with the same angular pitch (θ₁).

5. Assembly as claimed in claim 4, **characterized in that** said traction members (43) comprise a plurality of bolts passing through said first holes (21) and designed to be screwed into said second threaded holes (31).

6. Assembly as claimed in claim 2, **characterized in that** said radial flange (17) has a central portion (22) and a peripheral portion (23) extending axially from said central portion (22), said peripheral portion (23) having a substantially cylindrical inner annular surface (24) with a predetermined inner diameter (d₄).

7. Assembly as claimed in claim 6, **characterized in that** said second annular member (27) has a main portion (32) from which extend an end portion (33) having a substantially cylindrical outside surface (34) designed to be slidably coupled with said inner annular surface (24) of said flange (17) for guiding the longitudinal movement thereof upon screwing of said screws (43).

8. Assembly as claimed in claim 1, **characterized by** comprising connection means (38) for connecting said second shrinker (25) to said hollow shaft (2).

9. Assembly as claimed in claim 8, **characterized in that** said connecting means (38) comprise a projection (39) extending inwardly from the second inner surface (28) of said first annular member (26), said projection (39) being designed to be removably inserted in an annular groove (40) formed on the outer surface (4) of said hollow shaft (2).

10. Assembly as claimed in claim 1, **characterized in that** said first tubular member (8), said second tubular member (9) and a said first annular member (26) have respective longitudinal through cuts (35, 36, 37) to allow radial elastic deformation as a result of sliding motion of said first and said second pair of frusto conical surfaces (11, 12; 29, 30).

11. Assembly as claimed in claim 1, **characterized in that** said hollow shaft (2) has a substantially cylindrical inner recess (14) with a substantially flat bottom surface (15) which defines an abutment (16) for the axial end (13) of said first tubular member (8).
